(19) Europäisches Patentamt / European Patent Office / Office européen des brevets

(11) **EP 4 737 488 A1**

(12) **EUROPEAN PATENT APPLICATION**
published in accordance with Art. 153(4) EPC

(43) Date of publication:
06.05.2026   Bulletin 2026/19

(21) Application number: 24832107.7

(22) Date of filing: 28.06.2024

(51) International Patent Classification (IPC):
*C08F 10/02* (2006.01)      *B65D 1/02* (2006.01)
*C08J 11/00* (2006.01)      *C08L 23/04* (2006.01)

(52) Cooperative Patent Classification (CPC):
B65D 1/02; C08F 10/02; C08J 11/00; C08L 23/04

(86) International application number:
PCT/JP2024/023516

(87) International publication number:
WO 2025/005249 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.06.2023   JP 2023105997

(71) Applicant: Japan Polyethylene Corporation
Tokyo 100-8251 (JP)

(72) Inventor: TOMITA, Kota
Kawasaki-shi, Kanagawa 210-8548 (JP)

(74) Representative: Müller-Boré & Partner
Patentanwälte PartG mbB
Friedenheimer Brücke 21
80639 München (DE)

(54) **POLYETHYLENE-BASED MODIFIER, RECYCLED RESIN COMPOSITION, AND BLOWN CONTAINER**

(57)   In the molding of a polyethylene-based blow molded container, a recycled material is applied to the blow molded product, the usage of plastics is reduced, and the problem of plastic waste (waste plastics) is solved. In addition, by modifying the recycled material, a blow molded container with excellent durability is provided.

FIG. 1

EP 4 737 488 A1

**Description**

Technical Field

The present invention relates to a polyethylene-based modifier, a recycled resin composition and a blow molded container.

Background Art

In the field of blow molded containers, various kinds of thermoplastic resins are used. Of them, polyethylene has been subjected to various studies and widely used due to its excellent mechanical properties, thermal properties, chemical resistance and so on.

In recent years, plastic waste (waste plastics) is a growing global problem, and a reduction in the usage of plastics and the introduction of new materials are under consideration. Some companies show attempts to review raw materials and build a new recycling system. Under such circumstances, the application of recycled materials to products has been studied in the field of blow molded containers made of synthetic resins.

For example, Patent Document 1 discloses a polyolefin-based recycled resin composition comprising a polyolefin-based recycled resin and a copolymer of ethylene and an $\alpha$-olefin containing 3 to 18 carbon atoms, the copolymer having specific properties and being produced in the presence of a metallocene-based catalyst. However, there is no suggestion of the amount of a high-molecular-weight component which is required from the viewpoint of modifying impact resistance and environmental stress cracking resistance, and the recycled polyolefin resin composition is not enough to be modified for blow molded containers.

Also, Patent Document 2 discloses a resin composition for blow molding, comprising [A] a modifier for high-density polyethylenes and [B] a high-density polyethylene for blow molding which is other than [A]. The modifier for high-density polyethylenes comprises an ethylene polymer having the following properties: (1) a unit derived from a C3-C6 $\alpha$-olefin may be contained in an amount of less than 10% by mole, (2) the density of the ethylene polymer is from 0.92 g/cm$^3$ to 0.98 g/cm$^3$, (3) the intrinsic viscosity [$\eta$] thereof is from 0.4 dl/g to 10 dl/g, and (4) the ethylene polymer is produced by use of a catalyst containing a metallocene compound represented by a specific structural formula. However, since the modifier has a wide range of properties, it cannot be said that the modifier is enough to provide, by modifying a recycled material, a blow molded container with excellent durability.

As for polyethylene resins, for example, Patent Document 3 discloses a polyethylene resin composition which contains a specific polyethylene component (A) of from 10% by mass to 40% by mass, a specific polyethylene component (B) of from 5% by mass to 50% by mass, and a specific polyethylene component (C) of from 40% by mass to 85% by mass, and which satisfies the following properties (1) to (5). Property (1): the MFR is from 0.1 g/10 min to 1 g/10 min. Property (2): the HLMFR is from 10 g/10 min to 50 g/10 min. Property (3): the HLMFR/MFR ratio is from 50 to 140. Property (4): the density is from 0.940 g/cm to 0.965 g/cm. Property (5): an inflection point of elongation viscosity caused by strain hardening is observed in a double logarithmic plot of elongation viscosity $\eta$(t) (unit: Pa·sec) and elongation time t (unit: sec) measured at temperature of 170°C and an elongation strain rate of 0.1 (unit: 1/sec). Patent Document 3 also discloses that a molded body consisting of the polyethylene resin composition can be produced by various kinds of molding methods such as blow molding, injection molding, inflation molding and extrusion molding. However, there is no suggestion of the application of the polyethylene resin composition to the field of recycled materials.

For example, Patent Document 4 discloses a polyethylene-based resin composition and a modifier, wherein the polyethylene-based resin composition is an ethylene-$\alpha$-olefin copolymer obtained by multi-stage polymerization of specific components (A) and (B) in this order by use of a metallocene catalyst, and it satisfies specific characteristics including (i) density and (ii) HLMFR. However, there is no suggestion of their application to a specific recycled material and its field of use.

For example, Patent Document 5 discloses a method for producing a recycled resin composition by mixing a recycled polyolefin resin with a resin composition containing a metallocene-based polyethylene. In particular, as the resin composition containing the metallocene-based polyethylene, a resin composition having the following properties is disclosed: a density of from 0.940 g/cm$^3$ to 0.970 g/cm$^3$, a MFR of from 0.1 g/10 min to 10 g/10 min, a HLMFR of from 10 g/10 min to 100 g/10 min, a HLMFR/MFR ratio of from 40 to 140, and a tensile impact strength of 300 kJ/m$^2$ or more. However, since a resin composition (B) containing the metallocene-based polyethylene, which was used in "Examples", contained small amounts of high-molecular-weight components, it cannot be said that the recycled resin composition is enough to provide blow molded containers with excellent durability and impact resistance.

For example, Patent Document 6 discloses a polyethylene-based resin composition comprising a recycled polyethylene-based resin (A), an ethylene polymer (B) comprising a constitutional unit derived from at least one $\alpha$-olefin containing 4 to 10 carbon atoms, and an ethylene polymer (C) comprising a constitutional unit derived from at least one $\alpha$-olefin containing 4 to 10 carbon atoms. However, due to its high MFR, a modifier comprising the ethylene polymers (B) and (C) is suggested to have low viscosity and contain small amounts of metallocene-based high-molecular-weight components. Accordingly, it cannot be said that the modifier is enough to provide blow molded containers with excellent impact resistance. In addition, there is no suggestion of the modification of durability.

Citation List

Patent Documents

Patent Document 1: Japanese Patent Application Laid-Open No. H08-127676

Patent Document 2: Japanese Patent Application Laid-Open No. H09-095571

Patent Document 3: Japanese Patent Application Laid-Open No. 2017-179256

Patent Document 4: Japanese Patent No. 6281371

Patent Document 5: Japanese Patent Application Laid-Open No. 2021-95442

Patent Document 6: Japanese Patent Application Laid-Open No. 2024-48543

Summary

Technical Problem

In such circumstances, it is desired to apply recycled materials to blow molded products, reduce the usage of plastics, and solve the problem of plastic waste (waste plastics).
In view of the problems with the prior art and so on, an object of the present invention is to apply, in the process of molding a polyethylene-based blow molded container, a recycled material to the blow molded product, reduce the usage of plastics, and solve the problem of plastic waste (waste plastics).
Especially, an object of the present invention is to provide, by modifying the recycled material, a blow molded container with excellent durability.

Solution to Problem

As a result of elaborate discussion on the circumstances, the inventors of the present invention found that by applying a polyethylene-based recycled material having specific properties and a polyethylene-based modifier having specific properties to a blow molded container, the recycled material can be applied to the blow molded product, the usage of plastics can be reduced, and the problem of plastic waste (waste plastics) can be solved. In addition, by modifying the recycled material, a blow molded container with excellent durability (such as tensile strength, tensile impact strength and environmental stress cracking resistance (bottle ESCR)) can be provided. Finally, the inventors achieved the present invention.
The present invention includes the following embodiments.

[1] A polyethylene-based modifier configured to modify a polyethylene-based recycled material satisfying the following properties (1-1) and (1-2):

property (1-1): the polyethylene-based recycled material has a density of from 0.930 g/cm$^3$ to 0.980 g/cm$^3$, and
property (1-2): the polyethylene-based recycled material has a melt flow rate (MFR) of from 0.1 g/10 min to 10.0 g/10 min, which is measured at a temperature of 190°C under a load of 2.16 kg, and it has a high load melt flow rate (HLMFR) of from 1 g/10 min to 100 g/10 min, which is measured at a temperature of 190°C under a load of 21.6 kg, wherein the polyethylene-based modifier satisfies the following property (2-1):
property (2-1): the polyethylene-based modifier has a b/a ratio of 0.90 or more (preferably from 0.90 to 2.50) where, a is the maximum of a component having 10$^5$ or less in a differential molecular weight distribution curve in a GPC measurement for polyethylene equivalent mass, and b is the maximum of a component having 10$^5$ or more.

[2] The polyethylene-based modifier according to the above [1], wherein the polyethylene-based modifier has a high load melt flow rate (HLMFR) of from 1 g/10 min to 20 g/10 min, which is measured at a temperature of 190°C under a load of 21.6 kg.

[3] The polyethylene-based modifier according to the above [1] or [2], wherein the polyethylene-based modifier has a melt flow rate (MFR) of 0.05 g/10 min or less, which is measured at a temperature of 190°C under a load of 2.16 kg.

[4] The polyethylene-based modifier according to any one of the above [1] to [3], wherein, when a total amount of the polyethylene contained in the polyethylene-based modifier is 100% by mass, an amount of a polyethylene component polymerized by a metallocene-based catalyst and contained in the polyethylene-based modifier is 40% by mass or more.

[5] A recycled resin composition comprising 1% by mass to 50% by mass of the polyethylene-based modifier according to any one of the above [1] to [4] and 99% by mass to 50% by mass of the polyethylene-based recycled material.

[6] The recycled resin composition according to the above [5], wherein the recycled resin composition satisfies the following properties (i) to (iii):

property (i): a tensile impact strength is 120 kJ/$m^2$ or more,
property (ii): a tensile strength by a full notch creep test (FNCT) is 16 hours or more, which is measured at 3.7 MPa according to ISO16770, and
property (iii): a HLMFR is 10 g/10 min or more.

[7] A blow molded container comprising the recycled resin composition according to the above [5] or [6].

Advantageous Effects of Invention

According to the present invention, the following effects are exerted: in the of polyethylene-based blow molded containers, the recycled material can be applied to the blow molded product, the usage of plastics can be reduced, and the problem of plastic waste (waste plastics) can be solved. In addition, by modifying the recycled material, the blow molded container with excellent durability can be provided.

Brief Description of Drawing

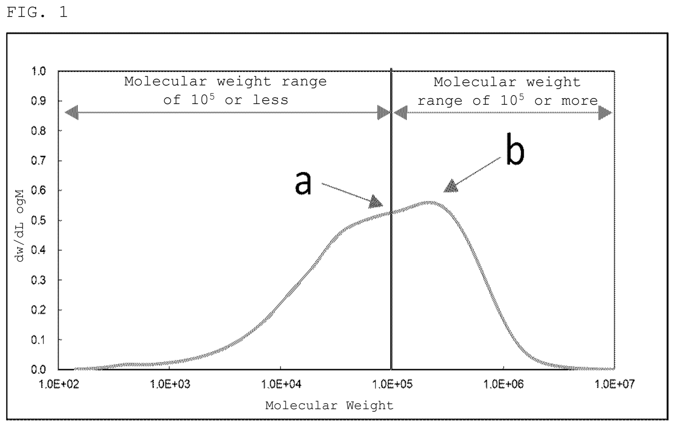

[FIG. 1] FIG. 1 is a graph showing an example of the differential molecular weight distribution curve of the polyethylene-based modifier in a gel permeation chromatography (GPC) measurement.

Description of Embodiments

According to the present invention, provided is a polyethylene-based modifier configured to modify a polyethylene-based recycled material satisfying the following properties (1-1) and (1-2):

property (1-1): the polyethylene-based recycled material has a density of from 0.930 g/$cm^3$ to 0.980 g/$cm^3$, and
property (1-2): the polyethylene-based recycled material has a melt flow rate (MFR) of from 0.1 g/10 min to 10.0 g/10 min, which is measured at a temperature of 190°C under a load of 2.16 kg, and it has a high load melt flow rate (HLMFR) of from 1 g/10 min to 100 g/10 min, which is measured at a temperature of 190°C under a load of 21.6 kg, wherein the polyethylene-based modifier satisfies the following property (2-1):
property (2-1): the polyethylene-based modifier has a b/a ratio of 0.90 or more where, a is the maximum of a component having $10^5$ or less in a differential molecular weight distribution curve in a GPC measurement for polyethylene equivalent mass, and b is the maximum of a component having $10^5$ or more.

Hereinafter, the present invention will be described in detail, item by item.

In the present invention, the polyethylene-based resin means a collective term for an ethylene homopolymer and a copolymer of ethylene and an olefin described below, and it can be reworded as "ethylene polymer".

In the present DESCRIPTION, "to" which shows a numerical range is used to describe a range in which the numerical values described before and after "to" indicate the lower limit value and the upper limit value, both of which are included in the numerical range. The upper and lower limit values of the numerical range may be any combination of values.

1. Polyethylene-based recycled material

In the present invention, the polyethylene-based recycled material (the recycled material) means a polyethylene-based resin collected and recycled after its molding and/or use. As the recycled product, examples include, but are not limited to, a recycled plastic material, a material obtained by collecting burr, which is produced in the process of molding the polyethylene-based resin, a defective product, a cast-off product, a by-product or the like and making it reusable, and a material obtained by collecting a used or unused molded product and making it reusable.

The polyethylene-based recycled material contains carbonyl groups. In an infrared spectroscopy measurement, it satisfies the following formula (A) which represents the amount of the contained carbonyl groups using $I_{4250}$ and $I_{1586}$.

$$\text{Formula (A):} \quad I_{1586}/I_{4250} \geq 0.02$$

$I_{4250}$: In the infrared absorption spectrum, the difference in height between the reference baseline, which is the value at 4600 cm$^{-1}$, and the peak strength at 4250 cm$^{-1}$.

$I_{1586}$: In the infrared absorption spectrum, the difference in height between the reference baseline, which is a line connecting 1610 cm$^{-1}$ and 1560 cm$^{-1}$, and the peak strength at 1586 cm$^{-1}$.

In the DESCRIPTION, the recycled plastic material means a "material reprocessed from a collected (recycled) material in the production step and used in a final product or a component to be built into a product" according to JIS Q14021:2000.

The polyethylene-based recycled material of the present invention contains an ethylene homopolymer and one or more ethylene-based polymers selected from the group consisting of copolymers of ethylene and $\alpha$-olefins containing 3 to 12 carbon atoms. Their total content is 60% by mass or more, preferably 80% by mass or more, still more preferably 90% by mass or more, and even more preferably 100% by mass.

In the present invention, the presence of the ethylene homopolymer and the copolymers of ethylene and $\alpha$-olefins containing 3 to 12 carbon atoms in the polyethylene-based recycled material can be confirmed by a general analysis method. For example, it can be identified by measuring the Raman scattering spectrum of the polyethylene-based recycled material.

When the polyethylene-based recycled material used in the present invention is a commercially-available product, it is preferably a product which the quality is controlled and approved by the sales company. The quality of the recycled plastic material can be controlled by reference to guidelines based on the standards prescribed in JIS Q9091:2016, for example. As the polyethylene-based recycled material, examples include, but are not limited to, high density polyethylene (HDPE) "HA" manufactured by Mie Kasei Co., Ltd. Any product can be used without particular limitation, as long as it satisfies the property requirements of the present invention.

The properties of polyethylene-based recycled materials often deteriorate compared to virgin materials. Accordingly, it is important that the polyethylene-based recycled material used in the blow molded container of the present invention, is a material which can minimize the deterioration of the properties and which can exert the same or a higher level of properties as virgin materials.

It is important that the polyethylene-based recycled material of the present invention satisfies at least the following properties (1-1) and (1-2).

Property (1-1) of the polyethylene-based recycled material

Property (1-1): the polyethylene-based recycled material has a density of from 0.930 g/cm$^3$ to 0.980 g/cm$^3$.

In the present invention, it is important to select, as the polyethylene-based recycled material, one having a density of from 0.930 g/cm$^3$ to 0.980 g/cm$^3$, preferably from 0.940 g/cm$^3$ to 0.970 g/cm$^3$, and more preferably from 0.945 g/cm$^3$ to 0.960 g/cm$^3$. When the density of the polyethylene-based recycled material is less than 0.930 g/cm$^3$, there is a possibility that the stiffness of the polyethylene-based recycled material becomes insufficient, and the crystallization speed thereof decreases, resulting in a decrease in the number of the molding cycles of the molded product. On the other hand, when the density is more than 0.980 g/cm$^3$, there is a possibility that the impact resistance of the molded product decreases. When the density is within the above range, the polyethylene-based recycled material is well-mixed with the polyethylene-based modifier described below.

The density can be measured according to JIS K6922-1, 2:1997.

Property (1-2) of the polyethylene-based recycled material

Property (1-2): the polyethylene-based recycled material has a melt flow rate (MFR) of from 0.1 g/10 min to 10.0 g/10 min, which is measured at a temperature of 190°C under a load of 2.16 kg, and it has a high load melt flow rate (HLMFR) of from 1 g/10 min to 100 g/10 min, which is measured at a temperature of 190°C under a load of 21.6 kg.

In the present invention, it is important to select, as the polyethylene-based recycled material, one having a melt flow rate (MFR), which is measured at a temperature of 190°C under a load of 2.16 kg, of from 0.1 g/10 min to 10.0 g/10 min, preferably from 0.15 g/10 min to 8.0 g/10 min, more preferably from 0.3 g/10 min to 7.0 g/10 min, and still more preferably from 1.0 g/10 min to 5.0 g/10 min. When the MFR of the polyethylene-based recycled material is less than 0.1 g/10 min, there is a possibility that due to a decrease in the flowability of the polyethylene-based recycled material, the amount of heat which is generated from the resin by the load of an extruder motor or shearing in the molding of the recycled material, is increased, or there is a possibility that since a flow instability phenomenon such as sharkskin and melt fracture is likely to occur, the appearance of the molded product deteriorates. On the other hand, when the MFR is more than 10.0 g/10 min, there is a possibility that the molded product cannot achieve impact resistance, and the long-term durability of the molded product decreases. When the MFR is within the above range, the polyethylene-based recycled material is well-mixed with the polyethylene-based modifier described below.

The MFR can be measured according to JIS K6922-2:1997.

Also in the present invention, it is important to select, as the polyethylene-based recycled material, one having a high load melt flow rate (HLMFR), which is measured at a temperature of 190°C under a load of 21.6 kg, of from 1 g/10 min to 100 g/10 min, preferably from 10 g/10 min to 80 g/10 min, more preferably from 15 g/10 min to 60 g/10 min, and still more preferably from 20 g/10 min to 55 g/10 min. When the HLMFR of the polyethylene-based recycled material is less than 1 g/10 min, there is a possibility that due to a decrease in the flowability of the polyethylene-based recycled material, the amount of heat which is generated from the resin by the load of an extruder motor or shearing in the molding of the recycled material is increased, or there is a possibility that since a flow instability phenomenon such as sharkskin and melt fracture is likely to occur, the appearance of the molded product deteriorates. On the other hand, when the HLMFR is more than 100 g/10 min, there is a possibility that the molded product cannot achieve impact resistance, and the long-term durability of the molded product decreases. When the HLMFR is within the above range, the polyethylene-based recycled material is well-mixed with the polyethylene-based modifier described below.

The HLMFR can be measured according to JIS K6922-2:1997.

Property (1-3) of the polyethylene-based recycled material

In the present invention, as the polyethylene-based recycled material, one which the ratio of the HLMFR to the MFR (HLMFR/MFR) is from 40 to 140, preferably from 50 to 110, and more preferably from 60 to 90, may be selected. The HLMFR/MFR ratio strongly correlates with molecular weight distribution. When the HLMFR/MFR ratio is a large value, the molecular weight distribution is wide. When the HLMFR/MFR ratio is a small value, the molecular weight distribution is narrow. When the HLMFR/MFR ratio is more than 140, the pinch-off strength of a molded bottle may decrease. When the HLMFR/MFR ratio is less than 40, the melt tension of a molded bottle may decrease, or melt fracture is likely to occur during the extrusion of resin. When the HLMFR/MFR ratio is within the above range, the polyethylene-based recycled material is well-mixed with the polyethylene-based modifier described below.

Property (1-4) of the polyethylene-based recycled material

In the present invention, the environmental stress cracking resistance (bottle ESCR)) of the polyethylene-based recycled material may be less than 1000 hours. As described above, generally, the properties of polyethylene-based recycled materials deteriorate compared to virgin materials. The polyethylene-based recycled material of the present invention may be one which the lower limit value of the environmental stress cracking resistance thereof is one hour or more, preferably 10 hours or more, and still more preferably 100 hours or more, and the upper limit value is less than 1000 hours. In the present invention, by being combined with the specific polyethylene-based modifier, the polyethylene-based recycled material can exert the same or a higher level of environmental stress cracking resistance as containers formed with virgin materials.

The environmental stress cracking resistance can be obtained as follows. A nonionic surfactant (polyoxyethylene(9) nonylphenyl ether manufactured by Sigma-Aldrich Corporation, product name: IGEPAL CO-630) is diluted to 33.3% by volume to obtain an aqueous solution. A blow molded flat container (bottle) with an inner volume of 400 ml and a weight of 30 g is filled with 100 ml of the aqueous solution. The contained is pressurized to 0.35 kg/cm$^2$ and stored in a thermostat bath at a temperature of 60°C. Then, the time that elapses before the container breaks is measured, thereby obtaining the environmental stress cracking resistance. This measurement is conducted using 10 containers of the same type, and the time that elapses before 5 of the 10 containers break is measured and determined as the value of the bottle ESCR.

Property (1-5) of the polyethylene-based recycled material

In the present invention, the tensile impact strength of the polyethylene-based recycled material is generally less than 300 kJ/m$^2$, and it is often around 130 kJ/m$^2$ or less. Generally, the properties of polyethylene-based recycled materials deteriorate compared to virgin materials. The polyethylene-based recycled material of the present invention may be one which the lower limit value of the tensile impact strength thereof is 10 kJ/m$^2$ or more (preferably 20 kJ/m$^2$ or more) and the upper limit value is less than 300 kJ/m$^2$ or less than 150 kJ/m$^2$. In the present invention, by being combined with the specific polyethylene-based modifier, the polyethylene-based recycled material can exert the same or a higher level of impact resistance as containers formed with virgin materials.

The tensile impact strength can be measured as follows. According to JIS K6922-2, a 1.5 mm-thick sheet is formed by compression molding. According to ASTM D1822, the sheet is punched out with a S-shaped dumbbell to obtain a test piece, and the test piece is measured at 23°C and 50% RH, thereby obtaining the tensile impact strength.

The lower limit value of the full notch creep test (FNCT) of the polyethylene-based recycled material, which is measured at 3.7 MPa according to ISO16770, is preferably 0.01 hours or more, more preferably 0.5 hours or more, still more preferably 1.0 hour or more, and particularly preferably 1.5 hours or more. The upper limit value is preferably as high as possible. For example, it may be 10 hours or more.

Property (1-6) of the polyethylene-based recycled material

In the polyethylene-based recycled material of the present invention, the content of an additive is preferably 10 parts by weight or less, more preferably 5 parts by weight or less, and still more preferably 3 parts by weight or less, with respect to 100 parts by weight of the polyethylene-based recycled material. In the present invention, the additive includes a common olefinbased polymer, a common rubber and a known additive such as an antioxidant, an ultraviolet absorber, a light stabilizer, a lubricant, an antistatic agent, an anti-fogging agent, an anti-blocking agent, a processing aid, a coloring pigment, a crosslinking agent, a foaming agent, an inorganic or organic filler and a flame retardant. As the known additive, examples include, but are not limited to, a (phenolic, phosphorous or sulfuric) antioxidant, a lubricant, an antistatic agent, a light stabilizer and an ultraviolet absorber. As the filler, examples include, but are not limited to, calcium carbonate, talc, metal powder (e.g., aluminum, copper, iron, lead), silica stone, diatomite, alumina, gypsum, mica, clay, asbestos, graphite, carbon black and titanium oxide.

In the present invention, when the content of the additive is more than 10 parts by weight, the durability of the blow molded container tends to decrease.

In the present invention, the type and content of the additive can be analyzed by a general analysis method.

Property (1-7) of the polyethylene-based recycled material

In the polyethylene-based recycled material of the present invention, the content of carbonyl groups derived from a maleic anhydride-containing compound is preferably less than 5.0% by mass, and the polyethylene-based recycled material is more preferably free of such carbonyl groups. The content of the carbonyl groups in the polyethylene-based recycled material can be measured by infrared absorption spectrum analysis. Preferably, no absorption peak is observed at 1710 cm$^{-1}$ and 1790 cm$^{-1}$. The presence of such carbonyl groups is not preferred since it may lead to the generation of gel or the like in the molded product.

To prevent the polyethylene-based recycled material from containing such carbonyl groups, it is important to control and approve the quality of the polyethylene-based recycled material so as not to contain the carbonyl groups.

2. Polyethylene-based modifier

The polyethylene-based modifier of the present invention may be a mixture of two or more kinds of polyethylenes. The polyethylene-based modifier of the present invention is not a recycled material, and it means a general virgin material. That is, in the present invention, the polyethylene-based modifier means one that is not a resin collected and recycled after its molding and/or use. When the polyethylene-based modifier is a recycled material, there is a description of that effect.

It is important that the polyethylene-based modifier of the present invention satisfies at least the following property (2-1).

Property (2-1) of the polyethylene-based modifier

Property (2-1): the polyethylene-based modifier has a b/a ratio of 0.90 or more where, a is the maximum of the component having 10$^5$ or less in a differential molecular weight distribution curve in a GPC measurement for polyethylene equivalent mass, and b is the maximum of the component having 10$^5$ or more.

In the present invention, it is important to select, as the polyethylene-based modifier, one having a b/a ratio of 0.90 or more (preferably from 0.90 to 2.50, more preferably from 0.95 to 1.80, still more preferably from 1.00 to 1.65, and even more preferably from 1.10 to 1.50) where, a is the maximum of the component having 10$^5$ or less in a differential molecular weight distribution curve in the gel permeation chromatography (GPC) measurement for polyethylene equivalent mass, and b is the maximum of the component having 10$^5$ or more. The molecular weight distribution (Mw/Mn) measured by GPC relates to the improvement of moldability and various kinds of properties of polymers, and it also relates to the improvement of the appearance and so on of the molded product. When the b/a ratio of the polyethylene-based modifier is less than 0.90, there is a possibility that the stiffness of the polyethylene-based modifier becomes insufficient, and the crystallization speed thereof decreases, resulting in a decrease in the number of the molding cycles of the molded product.

To control the molecular weight distribution within the predetermined range, a catalyst that can control the molecular weight distribution or an appropriate polymerization can be adopted. When the polyethylene-based modifier is a bimodal or multimodal polymer, the molecular weight distribution can be controlled within the predetermined range by adjusting the molecular weight of the components of the polymer. For example, the b/a ratio is increased by increasing the amounts of the components having a Mw of $10^5$ or more (Mw = $10^5$ or more) and mixing them. The b/a ratio can be decreased in an opposite way. The measurement of the molecular weight and molecular weight distribution by gel permeation chromatography (GPC) can be carried out in the condition described in JP-A No. 2017-179256.

FIG. 1 is a graph showing an example of the differential molecular weight distribution curve of the polyethylene-based modifier in a gel permeation chromatography (GPC) measurement.

As shown in FIG. 1, a is the maximum of the component having $10^5$ or less in a differential molecular weight distribution curve, and b is the maximum of the component having $10^5$ or more.

Property (2-2) of the polyethylene-based modifier

In the present invention, the HLMFR of the polyethylene-based modifier is preferably from 0.5 g/10 min to 100 g/10 min, more preferably from 1.0 g/10 min to 80 g/10 min, still more preferably from 3.0 g/10 min to 60 g/10 min, even more preferably from 4.0 g/10 min to 40 g/10 min, and particularly preferably from 4.3 g/10 min to 20 g/10 min.

When the HLMFR is less than 0.5 g/10 min, there is a possibility that due to a decrease in the flowability of the polyethylene-based modifier, the amount of heat which is generated from the resin by the load of an extruder motor or shearing in the molding of the recycled material, is increased, or there is a possibility that since a flow instability phenomenon such as sharkskin and melt fracture is likely to occur, the appearance of the molded product deteriorates, or the molded product cannot be pelletized and commercialized. On the other hand, when the HLMFR is more than 100 g/10 min, there is a possibility that the molded product cannot achieve impact resistance, and the long-term durability of the molded product decreases. When the HLMFR is within the above range, the polyethylene-based recycled material is well-mixed with the polyethylene-based modifier.

The upper limit value of the melt flow rate (MFR) of the polyethylene-based modifier, which is measured at a temperature of 190°C under a load of 2.16 kg, is preferably 0.05 g/10 min or less, more preferably 0.04 g/10 min or less, still more preferably 0.03 g/10 min or less, even more preferably 0.02 g/10 min or less, and particularly preferably 0.01 g/10 min or less. From the viewpoint of reduction of production cost, the lower limit value of the MFR is preferably 0.001 g/10 min or more.

The HLMFR and MFR of the polyethylene-based modifier can be adjusted by the hydrogen amount and temperature which are those of the components constituting the polyethylene-based modifier when they are polymerized, and by the ratio of the components constituting the polyethylene-based modifier.

Property (2-3) of the polyethylene-based modifier

In the present invention, as the polyethylene-based modifier, one having a density of preferably from 0.910 g/cm³ to 0.970 g/cm³, more preferably from 0.920 g/cm³ to 0.970 g/cm³, still more preferably from 0.925 g/cm³ to 0.965 g/cm³, even more preferably from 0.930 g/cm³ to 0.960 g/cm³, and particularly preferably from 0.935 g/cm³ to 0.958 g/cm³. When the density of the polyethylene-based modifier is less than 0.910 g/cm³, there is a possibility that the stiffness of the polyethylene-based modifier becomes insufficient, and the crystallization speed thereof decreases, resulting in a decrease in the number of the molding cycles of the molded product. On the other hand, when the density is more than 0.970 g/cm³, there is a possibility that the durability of the molded product deteriorates. When the density is within the above range, the polyethylene-based recycled material is well-mixed with the polyethylene-based modifier.

The density can be measured according to JIS K6922-1, 2:1997.

The density can be adjusted by the α-olefin amount which is that of the components constituting the polyethylene-based resin when they are polymerized, or by the ratio of the components constituting the polyethylene-based resin.

Property (2-4) of the polyethylene-based modifier

In the present invention, the tensile impact strength of the polyethylene-based modifier is preferably 300 kJ/m² or more, more preferably 600 kJ/m² or more, and still more preferably 900 kJ/m² or more. The upper limit value of the tensile impact strength of the polyethylene-based modifier is not particularly limited, and it is generally around 2000 kJ/m² or less. A high tensile impact strength as that of the polyethylene-based modifier cannot be exerted by a Ziegler- or chromium-based polyethylene-based resin alone. By using the resin having a tensile impact strength of 300 kJ/m$^2$ or more, the tensile impact strength of the composition containing the polyethylene-based modifier and the polyethylene-based recycled material can be increased.

The tensile impact strength can be measured as follows. According to JIS K6922-2, a 1.5 mm-thick sheet is formed by compression molding. According to ASTM D1822, the sheet is punched out with a S-shaped dumbbell to obtain a test piece, and the test piece is measured at 23°C and 50% RH, thereby obtaining the tensile impact strength.

Property (2-5) of the polyethylene-based modifier

When the total amount of the polyethylene contained in the polyethylene-based modifier is 100% by mass, the amount of the polyethylene component polymerized by the metallocene-based catalyst and contained in the polyethylene-based modifier is preferably 40% by mass or more. The reason why it is better to increase the proportion of the polyethylene component is thought as follows. When the polyethylene component is polymerized by use of a non-metallocene-based catalyst, since the active sites of the catalyst are non-uniform, a polymer having an undesired molecular weight is also produced by the polymerization, and the polymerized polyethylene component have a wide molecular weight distribution. Meanwhile, when the polyethylene component is polymerized by use of the metallocene-based catalyst, since the active sites of the catalyst are uniform, the polymerized polyethylene component has a narrow distribution in the high-molecular-weight range that is required from the viewpoint of impact resistance and long-term performance. In addition, since the metallocene-based catalyst allows uniform comonomer distribution, the formation of tie molecules that are required for ensuring long-term performance, is easily promoted.

As long as the above-described properties are satisfied, the polyethylene-based modifier used in the present invention may be a mixture of two or more kinds of polyethylenes. More specifically, the mixture described in JP-A No. 2017-179256 may be used. The resin composition is preferably a resin composition containing the polyethylene component polymerized by the metallocene-based catalyst and at least one selected from the group consisting of a polyethylene component polymerized by a chromium-based catalyst and a polyethylene component polymerized by a Ziegler catalyst (i.e., a polyethylene component polymerized by a catalyst other than the metallocene-based catalyst).

The polyethylene-based modifier is preferably a resin composition in which the content of the polyethylene component polymerized by the metallocene-based catalyst is 40% by mass, preferably from 45% by mass to 99% by mass, more preferably from 50% by mass to 80% by mass, and still more preferably from 60% by mass to 70% by mass. As the metallocene-based, chromium-based and Ziegler catalysts, conventionally-known polymerization catalysts may be used. The catalysts are preferably polymerization catalysts described in JP-A No. 2017-179256.

Property (2-5-1) of the polyethylene component polymerized by the metallocene-based catalyst

In the polyethylene-based modifier, the polyethylene component polymerized by the metallocene-based catalyst has a high load melt flow rate (HLMFR) of 0.2 g/10 min or more and less than 5 g/10 min, preferably from 0.3 g/10 min to 2.0 g/10 min, and more preferably from 0.6 g/10 min to 1.5 g/10 min at a temperature of 190°C under a load of 21.6 kg. When the HLMFR is less than 0.2 g/10 min, in the resin composition finally obtained, there is a possibility that the HLMFR cannot fall within the specified range and the flowability is decreased, or there is a possibility that the compatibility is decreased, thereby deteriorating the appearance of the molded product. On the other hand, when the HLMFR is 5 g/10 min or more, in the finally obtained resin composition, there is a possibility that the long-term durability of the molded product decreases. The HLMFR can be adjusted mainly by the hydrogen amount and polymerization temperature which are those of the polyethylene component when it is polymerized. As a property of the molecular weight distribution of the polyethylene component polymerized by the metallocene-based catalyst, the weight average molecular weight (Mw) measured by GPC is preferably from $1.0 \times 10^5$ to $5.0 \times 10^5$, more preferably from $2.0 \times 10^5$ to $4.0 \times 10^5$, and still more preferably from $2.5 \times 10^5$ to $3.5 \times 10^5$.

In the polyethylene-based modifier, the polyethylene component polymerized by the metallocene-based catalyst has a density of preferably from 0.915 g/cm$^3$ to 0.945 g/cm$^3$, and more preferably from 0.920 g/cm$^3$ to 0.935 g/cm$^3$. When the density is less than 0.915 g/cm$^3$, in the finally obtained resin composition, there is a possibility that the density cannot fall within the range, the stiffness becomes insufficient, and the crystallization speed decreases, resulting in a decrease in the number of the molding cycles. On the other hand, when the density is more than 0.945 g/cm$^3$, in the finally obtained resin composition, there is a possibility that the durability decreases. The density can be adjusted mainly by the $\alpha$-olefin amount which is that of the polyethylene component when it is polymerized.

Property (2-5-2) of the polyethylene component polymerized by the chromium-based catalyst

In the polyethylene-based modifier, the polyethylene component polymerized by the chromium-based catalyst has a HLMFR of preferably 2 g/10 min or more and less than 20 g/10 min, more preferably from 3 g/10 min to 15 g/10 min, still more preferably from 4 g/10 min to 12 g/10 min, and particularly preferably from 5 g/10 min to 10 g/10 min. When the HLMFR is less than 2 g/10 min, there is a possibility that the molecular weight increases, and the flowability and the moldability cannot be ensured. Also, in the finally obtained resin composition, there is a possibility that the HLMFR cannot fall within the specified range and the flowability decreases, or there is a possibility that the polyethylene component becomes a component having the highest viscosity in a low strain rate range, the polyethylene component is poorly dispersed, and the appearance of the molded product is deteriorated. On the other hand, when the HLMFR is 20 g/10 min or more, due to the influence of an increase in the amounts of low-molecular weight components, the impact resistance cannot be ensured, or there is a possibility that the effect of promoting the dispersion of the components is decreased. The HLMFR can be adjusted mainly by the hydrogen amount and polymerization temperature which are those of the polyethylene component when it is polymerized.

In the polyethylene-based modifier, the polyethylene component polymerized by the chromium-based catalyst has a density of preferably more than 0.945 g/cm$^3$ and 0.965 g/cm$^3$ or less, more preferably from 0.950 g/cm$^3$ to 0.963 g/cm$^3$, and still more preferably from 0.956 g/cm$^3$ to 0.961 g/cm$^3$. When the density of the polyethylene component is 0.945 g/cm$^3$ or less, in the finally obtained resin composition, there is a possibility that the density cannot fall within the range, the stiffness becomes insufficient, and the crystallization speed decreases, resulting in a decrease in the number of the molding cycles. Also, there is a possibility that due to a deterioration in the stiffness of the container, the container is likely to deform at high temperature, and due to the influence of the internal pressure of the container, etc., the container deforms and causes a leak. On the other hand, when the density is more than 0.965 g/cm$^3$, in the finally obtained resin composition, there is a possibility that the impact resistance performance decreases, and there is a possibility that the impact resistance of the container deteriorates. The density can be adjusted mainly by the $\alpha$-olefin amount which is that of the polyethylene component when it is polymerized.

Property (2-5-3) of the polyethylene component polymerized by the Ziegler catalyst

In the polyethylene-based modifier, the polyethylene component polymerized by the Ziegler catalyst has a melt flow rate (MFR) of preferably from 1 g/10 min to 200 g/10 min, more preferably from 2.5 g/10 min to 198 g/10 min, still more preferably from 10 g/10 min to 188 g/10 min, and even more preferably from 20 g/10 min to 188 g/10 min at a temperature of 190°C under a load of 2.16 kg. When the MFR is less than 1 g/10 min, there is a possibility that the molecular weight increases, and the flowability and the moldability cannot be ensured. Also, in the finally obtained resin composition, there is a possibility that the HLMFR cannot fall within the specified range and the flowability decreases, and since a flow instability phenomenon such as sharkskin and melt fracture is likely to occur, the appearance of the molded product deteriorates. On the other hand, when the MFR is more than 200 g/10 min, there is a possibility that due to the influence of an increase in the amounts of low-molecular weight components, the impact resistance cannot be ensured. Also, in the finally obtained resin composition, there is a possibility that the molded product cannot achieve impact resistance, and the durability of the molded product decreases. The MFR can be adjusted mainly by the hydrogen amount and polymerization temperature which are those of the polyethylene component when it is polymerized.

In the polyethylene-based modifier, the polyethylene component polymerized by the Ziegler catalyst has a density of preferably from 0.960 g/cm$^3$ to 0.980 g/cm$^3$, more preferably from 0.961 g/cm$^3$ to 0.975 g/cm$^3$, and still more preferably from 0.963 g/cm$^3$ to 0.968 g/cm$^3$. When the density is less than 0.960 g/cm$^3$, in the finally obtained resin composition, there is a possibility that the density cannot fall within the range, the stiffness becomes insufficient, and the crystallization speed decreases, resulting in a decrease in the number of the molding cycles. Also, there is a possibility that due to a deterioration in the stiffness of the container, the container is likely to deform at high temperature, and due to the influence of the internal pressure of the container, etc., the container deforms and causes a leak. On the other hand, when the density is more than 0.980 g/cm$^3$, in the finally obtained resin composition, there is a possibility that the impact resistance performance decreases, and there is a possibility that the durability of the container decreases. The density can be adjusted mainly by the $\alpha$-olefin amount which is that of the polyethylene component when it is polymerized.

The ethylene used in the polyethylene component used in the polyethylene-based modifier of the present invention, may be ethylene produced from crude oil that is derived from a common fossil material, or it may be plant-based ethylene. As the plant-based ethylene and a plant-based polyethylene, examples include, but are not limited to, the ethylene descried in Japanese translation of PCT international application No. 2010-511634 and the polymers thereof. The plant-based ethylene and the polymers thereof have carbon-neutral properties (i.e., they do not use any fossil material and do not cause an increase in carbon dioxide in the air) and can provide eco-friendly products.

3. Recycled resin composition

The recycled resin composition of the present invention contains 99% by mass to 50% by mass, preferably 95% by mass to 51% by mass, more preferably 90% by mass to 52% by mass, and still more preferably 85% by mass to 53% by mass of the polyethylene-based recycled material satisfying at least the above-described properties (1-1) and (1-2);

moreover, it contains 1% by mass to 50% by mass, preferably 5% by mass to 49% by mass, more preferably 10% by mass to 48% by mass, and still more preferably 15% by mass to 47% by mass of the polyethylene-based modifier satisfying at least the above-described property (2-1).

The recycled resin composition of the present invention contains 50% by mass or more of the polyethylene-based recycled material. By containing 50% by mass or more of the polyethylene-based recycled material, the usage of plastics can be reduced.

The recycled resin composition may satisfy at least the following properties (i) to (iii).

Property (i) of the recycled resin composition

Property (i): the tensile impact strength is 120 kJ/m$^2$ or more.

In the present invention, the tensile impact strength of the recycled resin composition is preferably 120 kJ/m$^2$ or more, more preferably 130 kJ/m$^2$ or more, and still more preferably 150 kJ/m$^2$ or more. When the tensile impact strength is less than 120 kJ/m$^2$, the impact resistance of the blow molded container tends to decrease. The tensile impact strength can be increased by increasing the proportion of the polyethylene-based modifier.

Property (ii) of the recycled resin composition

Property (ii): the tensile strength by the full notch creep test (FNCT), which is measured at 3.7 MPa according to ISO16770, is 16 hours or more.

In the present invention, the tensile strength of the recycled resin composition by the full notch creep test (FNCT), which is measured at 3.7 MPa according to ISO16770, is 16 hours or more, more preferably 30 hours or more, and still more preferably 40 hours or more.

Property (iii) of the recycled resin composition

Property (iii): the HLMFR is 10 g/10 min or more.

In the present invention, the high load melt flow rate (HLMFR) of the recycled resin composition, which is measured at a temperature of 190°C under a load of 21.6 kg, is 10 g/10 min or more, preferably from 13 g/10 min to 100 g/10 min, preferably from 15 g/10 min to 45 g/10 min, preferably from 16 g/10 min to 38 g/10 min, preferably from 20 g/10 min to 35 g/10 min, or preferably from 22 g/10 min to 30 g/10 min.

When the HLMFR is less than 10 g/10 min, there is a possibility that due to a decrease in the flowability of the recycled resin composition, the amount of heat which is generated from the resin by the load of an extruder motor or shearing in the molding of the recycled material, is increased, or there is a possibility that since a flow instability phenomenon such as sharkskin and melt fracture is likely to occur, the appearance of the molded product deteriorates. On the other hand, when the HLMFR is more than 100 g/10 min, there is a possibility that the long-term durability of the molded product decreases.

The HLMFR of the recycled resin composition can be adjusted by the hydrogen amount and temperature which are those of the components constituting the polyethylene-based modifier when they are polymerized, by the ratio of the components constituting the polyethylene-based modifier, and by the ratio of the polyethylene-based modifier to the polyethylene-based recycled material.

Property (iv) of the recycled resin composition

Property (iv): the density is from 0.930 g/cm$^3$ to 0.980 g/cm$^3$.

In the present invention, the recycled resin composition has a density of from 0.930 g/cm$^3$ to 0.980 g/cm$^3$, preferably from 0.940 g/cm$^3$ to 0.970 g/cm$^3$, and more preferably from 0.950 g/cm$^3$ to 0.960 g/cm$^3$. When the density of the recycled resin composition is less than 0.930 g/cm$^3$, there is a possibility that the stiffness becomes insufficient, and the crystallization speed decreases, resulting in a decrease in the number of the molding cycles. On the other hand, when the density is more than 0.980 g/cm$^3$, there is a possibility that the impact resistance decreases.

The density can be adjusted by the $\alpha$-olefin amount which is that of the components constituting the polyethylene-based modifier when they are polymerized, or it can be adjusted by the ratio of the components constituting the polyethylene-based modifier and by the ratio of the polyethylene-based modifier to the polyethylene-based recycled material.

Property (v) of the recycled resin composition

In the recycled resin composition of the present invention, the content of carbonyl groups derived from a maleic anhydride-containing compound is preferably less than 2.5% by mass, and the recycled resin composition is more preferably free of such carbonyl groups. The content of the carbonyl groups in the recycled resin composition can be measured by infrared absorption spectrum analysis. Preferably, no absorption peak is observed at 1710 cm$^{-1}$ and 1790 cm$^{-1}$. The presence of such carbonyl groups is not preferred since it may lead to the generation of gel or the like.

To prevent the recycled resin composition from containing such carbonyl groups, it is important to control and approve the quality of the polyethylene-based recycled material and so on so as not to contain the carbonyl groups.

As needed, the polyethylene-based modifier and recycled resin composition of the present invention may be mixed with a common additive such as any antioxidant, a neutralizer, an ultraviolet absorber, a light stabilizer, a lubricant, an antistatic agent, an anti-fogging agent, an anti-blocking agent, a processing aid, a coloring pigment, a crosslinking agent, a foaming agent, an inorganic or organic filler and a flame retardant. The content of the additive is the same as the content of the additive that may be contained in the polyethylene-based recycled material.

4. Method for molding the blow molded container

The blow molded container of the present invention can be molded by a general blow molding method. As the blow molding method, examples include, but are not limited to, an extrusion blow molding method, an accumulator blow molding method, a hot parison blow molding method, a cold parison blow molding method and an injection blow molding method. For example, the blow molded container of the present invention can be produced as follows: the recycled resin composition is extruded from an extruder to produce a molten parison; the parison is put in the mold of a blow molding machine, which is in a desired container shape; compressed gas is injected to inflate the parison to the inner wall surface of the mold; and the inflated parison is cooled down, thereby producing the blow molded container. In this method, an exemplary continuous molding mechanism is a shuttle type mechanism, a rotary type mechanism, a satellite type mechanism or the like, and an exemplary mold clamping method is a hydraulic mold clamping method, an electric mold clamping method, a toggle-type mold clamping method or the like.

More specifically, in the method for molding the blow molded container of the present invention, the resin is extruded at a temperature of from 180°C to 240°C, preferably from 190°C to 230°C, and still more preferably from 200°C to 220°C. The resin is extruded at a pressure of 50 MPa or less, preferably 40 MPa or less, and still more preferably 30 MPa or less. The temperature of the mold used in the blow molding is 5°C to 30°C, preferably from 10°C to 25°C, and still more preferably from 15°C to 20°C. The pressure of the blow molding is from 0.3 MPa to 0.8 MPa, preferably from 0.4 MPa to 0.7 MPa, and more preferably from 0.5 MPa to 0.6 MPa.

5. Blow molded container

The blow molded container is not particularly limited, as long as it is a blow molded container comprising the recycled resin composition of the present invention, and it may be a blow molded container comprising the recycled resin composition of the present invention. Also, the blow molded container of the present invention may be a blow molded product formed from the recycled resin composition by blow molding, or it may be a multi-layer blow molded product formed from the recycled resin composition by a multi-layer blow molding machine, as needed. The size of the blow molded product is not particularly limited, and it is preferably from about 10 ml to 2000 ml. The shape of the container is not particularly limited. As needed, any print or layer may be provided on the surface of the outer layer of the blow molded container of the present invention.

Especially, the blow molded container of the present invention may be a hollow container in a shape having, unlike a simple cylindrical shape, parts that are large different in the blow ratio of the parison, such as a container with a handle, a container having a bellows structure, a container having a neck part and a container consisting of parts with different diameters.

In general, the use of recycle materials leads to a remarkable deterioration in durability. However, the blow molded container of the present invention do not cause a decrease in durability, despite the use of the polyethylene-based recycled material.

The blow molded container of the present invention have good thickness uniformity, excellent surface uniformity, excellent chemical resistance, excellent impact resistance and so on. The blow molded container is suitable for applications such as a container that is required to have these properties. Especially, it can be suitably used in applications such as a container with good appearance (e.g., a cosmetic container, a detergent container, a shampoo container and a conditioner container) and a food container (e.g., a container for food oil).

More specifically, as the applications of the blow molded container of the present invention, examples include, but are not limited to, a medical container, a food container and a cosmetic container. As the food container, examples include, but are not limited to, a beverage container, a concentrated beverage container, a seasoning container, a prepared food container, a dressing container, a mayonnaise/ketchup container, a boil-in-the-bag meal container and a baby feeding bottle. As the cosmetic container, examples include, but are not limited to, containers for hair dressing products, hair care products, perfumes, hair dye products, eyeshadow, manicure, lotion, cream, emulsion, skin toner, perm solution and so on.

Examples

Hereinafter, the present invention will be described in more detail, with reference to examples. The present invention is not limited to these examples, unless it is beyond the gist thereof.

1. Measurement methods

The measurement methods used in the following examples are as follows.

(1) Density

The density was measured according to JIS K6922-1, 2:1997.

(2) Melt flow rate (MFR) at a temperature of 190°C under a load of 2.16 kg

The MFR was measured according to JIS K6922-2:1997.

(3) High load melt flow rate (HLMFR) at a temperature of 190°C under a load of 21.6 kg

The HLMFR was measured according to JIS K6922-2:1997.

(4) Tensile impact strength (TIS)

The tensile impact strength was measured as follows. According to JIS K6922-2, a 1.5 mm-thick sheet was formed by compression molding. According to ASTM D1822, the sheet was punched out with a S-shaped dumbbell to obtain a test piece, and the test piece was measured at 23°C and 50% RH, thereby obtaining the tensile impact strength.

(5) Tensile strength

The tensile strength was measured by the full notch creep test (FNCT) according to ISO16770. A test piece obtained by forming a 1 mm-width notch around a prism having a size of 6 mm × 6 mm × 60 mm with a razor blade to form a neck having a size of 4 mm × 4 mm, was prepared as a sample. In pure water at 80°C, a tensile stress corresponding to 3.7 MPa was applied to the sample, and the time that elapsed before the sample ruptured was measured and determined as the rupture time of the FNCT.

(6) Infrared absorption spectrum measurement

A sample was melted at 180°C for three minutes, and a film having a thickness of about 50 $\mu$m was produced by compression molding of the melted sample. The film was analyzed by Fourier transform infrared spectrophotometer, thereby obtaining an infrared absorption spectrum.

    Product name: FT/IR-6100 (manufactured by JASCO Corporation)
    Measurement method: transmission method
    Detector: TGS (triglycine sulfate)
    Accumulation times: 16 to 512 times
    Resolution: 4.0 cm$^{-1}$
    Measurement wavelength: 5000 cm$^{-1}$ to 500 cm$^{-1}$

2. Raw materials

2.1. Polyethylene-based recycled material

(1) Polyethylene-based recycled material

A recycled plastic having a density of 0.960 g/cm$^3$, a MFR of 0.70 g/10 min, a HLMFR of 55 g/10 min, a bottle ESCR of 1.4 hours, a FNCT of 1.5 hours and an $I_{1586}/I_{4250}$ ratio of 0.022, was used.

2.2. Polyethylene-based modifier raw materials

(1) Polyethylene component (MA) polymerized by a metallocene-based catalyst

A polyethylene component having a HLMFR of 0.6 g/10 min, a density of 0.920 g/cm$^3$ and a Mw of $3.0 \times 10^5$ was used.

(2) Polyethylene component (MB) polymerized by a metallocene-based catalyst

A polyethylene component having a HLMFR of 1.5 g/10 min, a density of 0.920 g/cm$^3$ and a Mw of $2.3 \times 10^5$ was used.

(3) Polyethylene component (CA) polymerized by a chromium-based catalyst

A polyethylene component having a HLMFR of 5 g/10 min and a density of 0.956 g/cm$^3$ was used.

(4) Polyethylene component (ZA) polymerized by a Ziegler-based catalyst

A polyethylene component having a MFR of 20 g/10 min and a density of 0.963 g/cm$^3$ was used.

(5) Polyethylene component (ZB) polymerized by a Ziegler-based catalyst

A polyethylene component having a MFR of 57 g/10 min and a density of 0.967 g/cm$^3$ was used.

(6) Polyethylene component (ZC) polymerized by a Ziegler-based catalyst

A polyethylene component having a MFR of 92 g/10 min and a density of 0.968 g/cm$^3$ was used.

(7) Polyethylene component (ZD) polymerized by a Ziegler-based catalyst

A polyethylene component having a MFR of 188 g/10 min and a density of 0.968 g/cm$^3$ was used.

(8) Polyethylene component (ZE) polymerized by a Ziegler-based catalyst

A polyethylene component having a MFR of 2.5 g/10 min and a density of 0.965 g/cm$^3$ was used.

3. Examples, Reference Example and Comparative Examples

[Examples 1 to 17, Reference Example 1 and Comparative Examples 1 to 5]

(1) Polyethylene-based modifiers

Polyethylene-based modifiers were prepared, which contained the following polyethylene components and additives at the ratios shown in Tables 1 and 2: any one of the polyethylene components polymerized by the metallocene-based catalysts; at least one selected from the group consisting of the polyethylene component polymerized by the chromium-based catalyst and the polyethylene components polymerized by the Ziegler-based catalysts; and additives (a phenolic antioxidant, a phosphorous antioxidant, and calcium stearate serving as a neutralizer). The amounts (unit: parts by weight) of the additives when the total amount of the polyethylene contained in the polyethylene-based modifier is determined as 100 parts by weight, are shown in Tables 1 and 2.
For each of the polyethylene-based modifiers obtained in Examples 1 to 17, Reference Example 1 and Comparative Examples 1 to 5, the b/a ratio where, a is the maximum of the component having $10^5$ or less in a differential molecular weight distribution curve in a GPC measurement for polyethylene equivalent mass, and b is the maximum of the component having $10^5$ or more, was calculated. The results are shown in Tables 1 and 2.
The HLMFR, MFR and density of the polyethylene-based modifiers obtained in Examples 1 to 17, Reference Example 1 and Comparative Examples 1 to 5 were measured. The results are shown in Tables 1 and 2.
The polyethylene-based modifier of Comparative Example 1 is the same in composition as the metallocene-based polyethylene-containing resin compositions of Examples 1 to 6 which are shown in Table 1 of Patent Document 5.

(2) Recycled resin composition

The recycled resin compositions of Examples 1 to 17, Reference Example 1 and Comparative Examples 1 to 5 were prepared, which contained the polyethylene-based modifiers and polyethylene-based recycled materials at the mixing ratios shown in Table 1.

The HLMFR, density, tensile impact strength (TIS) and tensile strength (by the full notch creep test (FNCT)) of the recycled resin compositions of Examples 1 to 17, Reference Example 1 and Comparative Examples 1 to 5 were measured. The results are shown in Tables 1 and 2.

[Table 1]

Table 1

| | | Unit | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Recipe for polyethylene-based modifier | MA | % by mass | 50 | 50 | 60 | 60 | 60 | 60 | | | 60 | 60 | 60 | 60 |
| | MB | % by mass | | | | | | | 60 | 65 | | | | |
| | CA | % by mass | | 15 | | | | | | | | | | |
| | ZA | % by mass | 50 | 35 | 40 | | | | | | 40 | 40 | 40 | 40 |
| | ZB | % by mass | | | | 40 | | | 40 | | | | | |
| | ZC | % by mass | | | | | 40 | | | | | | | |
| | ZD | % by mass | | | | | | | 40 | 35 | | | | |
| | ZE | % by mass | | | | | | | | | | | | |
| | Phenolic antioxidant | Parts by weight | 0.25 | 0.25 | 0.25 | 0.25 | 0.25 | 0.25 | 0.25 | 0.25 | 0.25 | 0.25 | 0.25 | 0.25 |
| | Phosphorous antioxidant | Parts by weiaht | 0.25 | 0.25 | 0.25 | 0.25 | 0.25 | 0.25 | 0.25 | 0.25 | 0.25 | 0.25 | 0.25 | 0.25 |
| | Calcium stearate | Parts by weight | 0.1 | 0.1 | 0.1 | 0.1 | 0.1 | 0.1 | 0.1 | 0.1 | 0.1 | 0.1 | 0.1 | 0.1 |

| | | Unit | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Properties of polyethylene-based modi-fier | a = GPC $10^5$ or less (Maximum value) | - | 0.514 | 0.524 | 0.530 | 0.479 | 0.459 | 0.436 | 0.552 | 0.542 | 0.530 | 0.530 | 0.530 | 0.530 |
| | b = GPC $10^5$ or more (Maximum value) | - | 0.532 | 0.560 | 0.606 | 0.582 | 0.583 | 0.578 | 0.597 | 0.625 | 0.606 | 0.606 | 0.606 | 0.606 |
| | Ratio of b/a | - | 1.03 | 1.07 | 1.14 | 1.22 | 1.27 | 1.32 | 1.08 | 1.15 | 1.14 | 1.14 | 1.14 | 1.14 |
| | HLMFR | g/10 min | 6.8 | 3.8 | 3.6 | 4.3 | 4.3 | 4.5 | 9.0 | 8.1 | 4.0 | 4.0 | 4.0 | 4.0 |
| | MFR | g/10 min | 0.02 | Less than 0.01 | Less than 0.01 | Less than 0.01 | Less than 0.01 | Less than 0.01 | 0.02 | 0.02 | Less than 0.01 | Less than 0.01 | Less than 0.01 | Less than 0.01 |
| | Density | g/cm$^3$ | 0.942 | 0.941 | 0.938 | 0.940 | 0.941 | 0.941 | 0.940 | 0.939 | 0.938 | 0.938 | 0.938 | 0.938 |
| Properties of modified recycled resin composition | Mixing ratio (Re-cycled material/Mo-difier) | - | 70/30 | 70/30 | 70/30 | 70/30 | 70/30 | 70/30 | 70/30 | 70/30 | 90/10 | 80/20 | 60/40 | 50/50 |
| | HLMFR | g/10 min | 27 | 22 | 20 | 22 | 22 | 23 | 30 | 27 | 38 | 28 | 15 | 11 |
| | Density | g/cm$^3$ | 0.955 | 0.956 | 0.954 | 0.955 | 0.955 | 0.955 | 0.955 | 0.954 | 0.959 | 0.957 | 0.952 | 0.949 |
| | TIS (Tensile impact strength) | kJ/m$^2$ | 210 | 210 | 200 | 210 | 200 | 210 | 200 | 220 | 131 | 197 | 343 | 417 |
| | FNCT (Tensile strenath) | Hours | 65 | 50 | 170 | 240 | 190 | 180 | 100 | 100 | 41 | 80 | 760 | >1000 |

EP 4 737 488 A1

[Table 2]

[Table 2]

Table 2

| | | Unit | Example 13 | Example 14 | Example 15 | Example 16 | Example 17 | Reference Example 1 | Comparative Example 1 | Comparative Example 2 | Comparative Example 3 | Comparative Example 4 | Comparative Example 5 |
|---|---|---|---|---|---|---|---|---|---|---|---|---|---|
| Recipe for polyethylene-based modifier | MA | % by mass | 70 | 80 | 80 | 80 | 100 | | 25 | 30 | 30 | 40 | 50 |
| | MB | % by mass | | | | | | | | | | | |
| | CA | % by mass | | | | | | | 15 | 10 | 15 | | |
| | ZA | % by mass | 30 | 20 | 20 | 20 | | | 60 | 60 | 55 | 60 | |
| | ZB | % by mass | | | | | | | | | | | |
| | ZC | % by mass | | | | | | | | | | | |
| | ZD | % by mass | | | | | | | | | | | |
| | ZE | % by mass | | | | | | | | | | | 50 |
| | Phenolic antioxidant | Parts by weight | 0.25 | 0.25 | 0.25 | 0.25 | | | 0.25 | 0.25 | 0.25 | 0.25 | 0.25 |
| | Phosphorous antioxidant | Parts by weight | 0.25 | 0.25 | 0.25 | 0.25 | | | 0.25 | 0.25 | 0.25 | 0.25 | 0.25 |
| | Calcium stearate | Parts by weight | 0.1 | 0.1 | 0.1 | 0.1 | | | 0.1 | 0.1 | 0.1 | 0.1 | 0.1 |

EP 4 737 488 A1

19

| | | Unit | Example 13 | Example 14 | Example 15 | Example 16 | Example 17 | Reference Example 1 | Comparative Example 1 | Comparative Example 2 | Comparative Example 3 | Comparative Example 4 | Comparative Example 5 |
|---|---|---|---|---|---|---|---|---|---|---|---|---|---|
| Properties of polyethylene-based modifier | a = GPC $10^5$ or less (Maximum value) | - | 0.562 | 0.586 | 0.586 | 0.586 | 0.560 | - | 0.609 | 0.594 | 0.579 | 0.565 | 0.613 |
| | b = GPC $10^5$ or more (Maximum value) | - | 0.676 | 0.756 | 0.756 | 0.756 | 0.916 | - | 0.476 | 0.484 | 0.489 | 0.491 | 0.544 |
| | Ratio of b/a | - | 1.20 | 1.29 | 1.29 | 1.29 | 1.64 | - | 0.78 | 0.81 | 0.84 | 0.87 | 0.88 |
| | HLMFR | g/10 min | 1.8 | 1.1 | 1.1 | 1.1 | 0.6 | - | 27 | 22 | 18 | 15 | 5.5 |
| | MFR | g/10 min | Less than 0.01 | Less than 0.01 | Less than 0.01 | Less than 0.01 | Less than 0.01 | - | 0.40 | 0.30 | 0.20 | 0.10 | Less than 0.01 |
| | Density | g/cm³ | 0.934 | 0.929 | 0.929 | 0.929 | 0.920 | - | 0.952 | 0.950 | 0.950 | 0.946 | 0.943 |
| Properties of modified recycled resin composition | Mixing ratio (Recycled material/Modifier) | - | 70/30 | 95/5 | 90/10 | 70/30 | 80/20 | 100/0 | 70/30 | 70/30 | 70/30 | 70/30 | 90/10 |
| | HLMFR | g/10 min | 16 | 45 | 35 | 16 | 14 | 55 | 42 | 40 | 36 | 36 | 44 |
| | Density | g/cm³ | 0.952 | 0.960 | 0.959 | 0.951 | 0.953 | 0.960 | 0.959 | 0.958 | 0.958 | 0.957 | 0.958 |
| | TIS (Tensile impact strength) | kJ/m² | 382 | 132 | 167 | 402 | 322 | 102 | 130 | 140 | 140 | 146 | 142 |
| | FNCT (Tensile strength) | Hours | 537 | 31 | 69 | 342 | 666 | 1 | 5 | 10 | 10 | 12 | 15 |

EP 4 737 488 A1

As shown in Tables 1 and 2, the b/a ratio of the polyethylene-based modifiers of Examples 1 to 17 falled within the specified range of the present invention, and the HLMFR, density, tensile impact strength and tensile strength of the recycled resin compositions of Examples 1 to 17 satisfied the desired conditions.

Meanwhile, as shown in Table 2, the b/a ratio of the polyethylene-based modifiers of Comparative Examples 1 to 5 were out of the specified range of the present invention. Of the HLMFR, density, tensile impact strength and tensile strength of the recycled resin compositions of Comparative Examples 1 to 5, at least the tensile strength did not satisfy the desired condition.

Industrial Applicability

The present invention is very industrially advantageous for the following reasons. According to the present invention, by applying the polyethylene-based recycled material having the specific properties and the polyethylene-based modifier having the specific properties to the polyethylene-based blow molded container, the recycled material can be applied to the blow molded product, the usage of plastics can be reduced, and the problem of plastic waste (waste plastics) can be solved. In addition, by modifying the recycled material, the blow molded container with excellent durability can be provided.

Especially, since the efficient use of the recycled material can be achieved by the present invention, from the viewpoint of saving resources and solving global environmental problems, a recycling-oriented economic system can be created, and the present invention is very industrially useful, accordingly.

**Claims**

1. A polyethylene-based modifier configured to modify a polyethylene-based recycled material satisfying the following properties (1-1) and (1-2):

   property (1-1): the polyethylene-based recycled material has a density of from 0.930 g/cm$^3$ to 0.980 g/cm$^3$, and
   property (1-2): the polyethylene-based recycled material has a melt flow rate (MFR) of from 0.1 g/10 min to 10.0 g/10 min, which is measured at a temperature of 190°C under a load of 2.16 kg, and it has a high load melt flow rate (HLMFR) of from 1 g/10 min to 100 g/10 min, which is measured at a temperature of 190°C under a load of 21.6 kg, wherein the polyethylene-based modifier satisfies the following property (2-1):
   property (2-1): the polyethylene-based modifier has a b/a ratio of 0.90 or more where, a is the maximum of a component having 10$^5$ or less in a differential molecular weight distribution curve in a GPC measurement for polyethylene equivalent mass, and b is the maximum of a component having 10$^5$ or more.

2. The polyethylene-based modifier according to claim 1, wherein the polyethylene-based modifier has a high load melt flow rate (HLMFR) of from 1 g/10 min to 20 g/10 min, which is measured at a temperature of 190°C under a load of 21.6 kg.

3. The polyethylene-based modifier according to claim 1 or 2, wherein the polyethylene-based modifier has a melt flow rate (MFR) of 0.05 g/10 min or less, which is measured at a temperature of 190°C under a load of 2.16 kg.

4. The polyethylene-based modifier according to any one of claims 1 to 3, wherein, when a total amount of the polyethylene contained in the polyethylene-based modifier is 100% by mass, an amount of a polyethylene component polymerized by a metallocene-based catalyst and contained in the polyethylene-based modifier is 40% by mass or more.

5. A recycled resin composition comprising 1% by mass to 50% by mass of the polyethylene-based modifier according to any one of claims 1 to 4 and 99% by mass to 50% by mass of the polyethylene-based recycled material.

6. The recycled resin composition according to claim 5, wherein the recycled resin composition satisfies the following properties (i) to (iii):

   property (i): a tensile impact strength is 120 kJ/m$^2$ or more,
   property (ii): a tensile strength by a full notch creep test (FNCT) is 16 hours or more, which is measured at 3.7 MPa according to ISO16770, and
   property (iii): a HLMFR is 10 g/10 min or more.

7. A blow molded container comprising the recycled resin composition according to claim 5 or 6.

FIG. 1

## INTERNATIONAL SEARCH REPORT

| International application No. |
|---|
| **PCT/JP2024/023516** |

### A. CLASSIFICATION OF SUBJECT MATTER

**C08F 10/02**(2006.01)i; **B65D 1/02**(2006.01)i; **C08J 11/00**(2006.01)i; **C08L 23/04**(2006.01)i
FI: C08F10/02; B65D1/02 100; C08J11/00; C08L23/04

According to International Patent Classification (IPC) or to both national classification and IPC

### B. FIELDS SEARCHED

Minimum documentation searched (classification system followed by classification symbols)

C08F10/02; B65D1/02; C08J11/00; C08L23/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-165356 A (JAPAN POLYETHYLENE CORP.) 25 October 2018 (2018-10-25) claims, examples, tables 2, 4, paragraph [0089] | 1-6 |
| Y | | 7 |
| Y | JP 2017-179304 A (JAPAN POLYETHYLENE CORP.) 05 October 2017 (2017-10-05) paragraphs [0002], [0155]-[0156] | 7 |
| Y | JP 9-95571 A (MITSUI PETROCHEMICAL IND) 08 April 1997 (1997-04-08) paragraph [0105] | 7 |
| Y | JP 2001-253424 A (KAO CORPORATION) 18 September 2001 (2001-09-18) claims, examples | 7 |
| A | JP 2014-208817 A (JAPAN POLYETHYLENE CORP.) 06 November 2014 (2014-11-06) claims, examples | 1-7 |
| A | JP 2020-139149 A (JAPAN POLYETHYLENE CORP.) 03 September 2020 (2020-09-03) claims, examples | 1-7 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2024** | **24 September 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
|---|
| **PCT/JP2024/023516** |

### C.    DOCUMENTS CONSIDERED TO BE RELEVANT

| Category* | Citation of document, with indication, where appropriate, of the relevant passages | Relevant to claim No. |
|---|---|---|
| A | JP 2017-179256 A (JAPAN POLYETHYLENE CORP.) 05 October 2017 (2017-10-05) claims, examples | 1-7 |
| A | JP 2021-95442 A (JAPAN POLYETHYLENE CORP.) 24 June 2021 (2021-06-24) claims, examples | 1-7 |
| A | WO 2012/057037 A1 (TEIJIN LIMITED) 03 May 2012 (2012-05-03) paragraph [0079] | 1-7 |
| E, X | JP 2024-115085 A (PRIME POLYMER CO., LTD.) 26 August 2024 (2024-08-26) claims, examples, paragraph [0002] | 1-7 |
| P, X | JP 2024-48543 A (PRIME POLYMER CO., LTD.) 09 April 2024 (2024-04-09) claims, examples, paragraph [0002] | 1-7 |
| P. X | CN 117624756 A (YANGGUANG WATER SURFACE PHOTOVOLTAIC TECH CO.. LTD.) 01 March 2024 (2024-03-01) claims, examples | 1-7 |
| P, A | JP 2023-149991 A (JAPAN POLYETHYLENE CORP.) 16 October 2023 (2023-10-16) claims, examples | 1-7 |
| P, A | JP 2024-27740 A (ASAHI KASEI KABUSHIKI KAISHA) 01 March 2024 (2024-03-01) claims, examples | 1-7 |

Form PCT/ISA/210 (second sheet) (July 2022)

## INTERNATIONAL SEARCH REPORT
### Information on patent family members

International application No.

**PCT/JP2024/023516**

| Patent document cited in search report | | | Publication date (day/month/year) | Patent family member(s) | | | Publication date (day/month/year) |
|---|---|---|---|---|---|---|---|
| JP | 2018-165356 | A | 25 October 2018 | (Family: none) | | | |
| JP | 2017-179304 | A | 05 October 2017 | (Family: none) | | | |
| JP | 9-95571 | A | 08 April 1997 | US 6063871 A column 14, lines 36-44 EP 783022 A1 KR 10-1997-0706347 A CN 1159202 A | | | |
| JP | 2001-253424 | A | 18 September 2001 | (Family: none) | | | |
| JP | 2014-208817 | A | 06 November 2014 | (Family: none) | | | |
| JP | 2020-139149 | A | 03 September 2020 | (Family: none) | | | |
| JP | 2017-179256 | A | 05 October 2017 | (Family: none) | | | |
| JP | 2021-95442 | A | 24 June 2021 | (Family: none) | | | |
| WO | 2012/057037 | A1 | 03 May 2012 | US 2013/0224560 A1 paragraph [0243] CN 103222087 A KR 10-2014-0003410 A | | | |
| JP | 2024-115085 | A | 26 August 2024 | (Family: none) | | | |
| JP | 2024-48543 | A | 09 April 2024 | (Family: none) | | | |
| CN | 117624756 | A | 01 March 2024 | (Family: none) | | | |
| JP | 2023-149991 | A | 16 October 2023 | (Family: none) | | | |
| JP | 2024-27740 | A | 01 March 2024 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08127676 A
- JP H09095571 A
- JP 2017179256 A
- JP 6281371 B
- JP 2021095442 A
- JP 2024048543 A
- JP 2010511634 W